**Europäisches Patentamt**

**European Patent Office**

**Office européen des brevets**

(19)

(11) Veröffentlichungsnummer: **0 094 339 B1**

(12) **EUROPÄISCHE PATENTSCHRIFT**

(45) Veröffentlichungstag der Patentschrift: 28.01.87

(21) Anmeldenummer: **83710025.4**

(22) Anmeldetag: **05.05.83**

(51) Int. Cl.⁴: **B 01 L 3/02,** G 01 N 33/48, G 01 N 15/04

(54) Pipette zur Durchführung und Bestimmung von Sedimentationsverläufen, insbesondere der Blutsenkung.

(30) Priorität: **07.05.82 DE 3217123**

(43) Veröffentlichungstag der Anmeldung: **16.11.83 Patentblatt 83/46**

(45) Bekanntmachung des Hinweises auf die Patenterteilung: **28.01.87 Patentblatt 87/5**

(84) Benannte Vertragsstaaten: **AT BE CH FR GB IT LI LU NL SE**

(56) Entgegenhaltungen:
**DE - A - 2 556 801**
**DE - A - 2 631 291**
**DE - A - 2 757 039**
**US - A - 2 729 971**
**US - A - 3 864 979**

(73) Patentinhaber: **Haase, Walter, Gelliehäuser Strasse 6, D-3407 Gleichen-Benniehausen (DE)**

(72) Erfinder: **Haase, Walter, Gelliehäuser Strasse 6, D-3407 Gleichen-Benniehausen (DE)**

(74) Vertreter: **Patentanwälte Dipl.-Ing. Rudolf Bibrach Dipl.-Ing. Elmar Rehberg, Pütterweg 6 Postfach 738, D-3400 Göttingen (DE)**

ACTORUM AG

**Beschreibung**

Die Erfindung bezieht sich auf eine Pipette zur Durchführung und Bestimmung von Sedimentationsverläufen, insbesondere der Blutsenkung, mit den im Oberbegriff des Anspruches 1 genannten Merkmalen.

Eine aus dem DE-U-7 737 145 bekannten Pipette zielt darauf ab, das Blut ordnungsgemäss und ohne Luftblasen in die Pipette einfüllen zu können sowie die Gefahr des Auslaufens der Pipetten zu vermeiden. Zu diesem Zweck ist am unteren Ende des Rohres ein Einfüllstutzen mit einem Einfüllabzweig zum Ansetzen der Spritze vorgesehen, wobei in dem Einfüllstutzen eine Drossel angeordnet ist, die in Form eines Doppelrückschlagventils vorgesehen sein kann. Wird bei dieser Pipette das Blut bei senkrecht stehendem Rohr eingefüllt, dann lässt es sich nicht ausschliessen, dass Luftblasen aus dem Einfüllstutzen und/oder der Blutentnahmespritze in die im Rohr aufsteigende Blutsäule gelangen und so Anlass für Fehlmessungen sein können.

Um das Sedimentationsgut blasenfrei einzufüllen, ist es bei einer gattungsgemässen Pipette bekannt, die das Sedimentationsgut enthaltende Spritze an einen mit der Rohrachse fluchtenden Einfüllstutzen schräg nach unten anzusetzen, so dass in der Entnahmespritze enthaltende Luftblasen nicht mit ausgedrückt werden können. Auch andere Massnahmen zum blasenfreien Einfüllen sind bekannt.

Die US-A-3 864 979 zeigt eine Pipette zur Durchführung von Blutsenkungen, mit einem Rohr, in dessen Innerem in einem Endbereich ein Barriere-Pfropfen vorgesehen ist, der zweiteilig ausgebildet ist und aus einem inneren und einem äusseren Teil besteht. Der äussere Teil ist völlig undurchlässig ausgebildet und kann beispielsweise aus Gummi bestehen. Der innere Teil ist gasdurchlässig, jedoch nur bedingt flüssigkeitsdurchlässig ausgebildet und weist einen erheblich kleineren Querschnitt auf, als es dem freien Querschnitt des Rohres aus Glas entspricht. Dieser Barriere-Pfropfen hat den Zweck, beim Auffüllen des Bluts durch einen Saugvorgang den Widerstand, der beim Saugen überwunden werden muss, dann sprunghaft plötzlich zu erhöhen, wenn die Blutsäule den Barrierepfropfen erreicht. Dies ist für die saugende Bedienungsperson merkbar und zeigt an, dass genügend Blut aufgesogen worden ist, so dass der Saugvorgang abgebrochen werden kann. Damit ist gleichzeitig sichergestellt, dass die saugende Bedienungsperson nicht aus Versehen Blut in den Mund aufnehmen kann. Auf der Aussenseite des Rohres kann eine geeignete Skala angebracht sein, wobei die untere Kante des Barrierepfropfens so positioniert ist, dass sie mit der Null-Marke der Skala übereinstimmt.

Der Erfindung liegt die Aufgabe zugrunde, das Sedimentationsgut nicht nur blasenfrei, sondern auch meniskusfrei auffüllen zu können, um gleiche Ausgangsbedingungen durch eine waagerecht abgeschlossene Säule des Sedimentationsgutes zu haben. Diese waagerecht abgeschlossene Säule ist Voraussetzung für eine maschinelle Auswertung des Sedimentationsverlaufs, bei der durch eine Kurzzeitanalyse Langzeitwerte festgestellt werden.

Erfindungsgemäss wird dies durch die im kennzeichnenden Teil des Anspruchs 1 angegebenen Merkmale erreicht. Entscheidend ist, dass sich das Sedimentationsgut blasen- und meniskusfrei auffüllen lässt, so dass eindeutige und reproduzierbar erreichbare Ausgangsbedingungen für die maschinelle Auswertung des Sedimentationsverlaufs erreicht werden. Damit wird es möglich, durch Kurzzeitanalyse Langzeitwerte verlässlich festzustellen. Die aufgezeigte Pipette ist besonders geeignet und dazu bestimmt, in einem Auswerteverfahren und einer entsprechenden Vorrichtung benutzt zu werden, die nach der DE-A-2 757 039 arbeiten.

Der Filtereinsatz kann bei Verwendung von Blut als Sedimentationsgut eine Porosität von 1 bis 10 $\mu$ – insbesondere 5 $\mu$ – aufweisen. Kunststofffilter haben sich hier besonders gut bewährt.

Am unteren Ende des Rohres kann ein Einfüllstutzen vorgesehen sein, der in seinem Querschnitt keine querschnittsverengenden Einbauten aufweist. Damit ist für den Durchgang des Sedimentationsguts im Bereich des Einfüllstutzens und am Übergang zu dem Rohr alles vermieden, was zu einer Beeinträchtigung der Strömung des Sedimentationsguts beim Auffüllvorgang führen könnte. Es ist weder ein Drosselventil noch ein Absperrventil vorhanden. Der Querschnitt ist an dieser Stelle nicht eingeengt, so dass erhöhte Strömungsgeschwindigkeiten beim Einfüllen ebenfalls nicht auftreten. Dies bietet die Gewähr dafür, dass beispielsweise beim dichtenden Ansetzen einer Spritze an den Einfüllabzweig die im Einfüllstutzen eingeschlossene Luft durch das in gleichförmiger Geschwindigkeit nachgeschobene Sedimentationsgut vor diesem her durch das Rohr geschoben wird, so dass eine Verwirbelung dieser Luft mit dem Sedimentationsgut nicht eintritt.

Das Rohr und ein am Einfüllstutzen vorgesehener Rohraufnahmeabzweig können gleichen Innendurchmesser aufweisen, wobei am Übergang von einem Einfüllabzweig zu dem Rohraufnahmeabzweig abgerundete Kanten vorgesehen sind. Diese abgerundeten Kanten tragen ebenfalls dazu bei, dass eine Verwirbelung der Luft mit dem Sedimentationsgut nicht stattfindet. Damit ist die Gewähr dafür gegeben, dass auch beim Einfüllen mit einer Spritze der Filtereinsatz blasen- und meniskusfrei erreicht wird, so dass reproduzierbare Ausgangsbedingungen für eine maschinelle Auswertung in Kurzzeitanalyse gegeben sind.

Zwischen dem Filtereinsatz im Rohr und dem Einfüllstutzen kann ein Absorptionskörper im Abstand von der unteren Kante des Filtereinsatzes vorgesehen sein. Dieser Absorptionskörper dient ebenfalls der maschinellen Auswertung. Durch den Absorptionskörper erfolgt eine Ausschaltung des Signals. Durch den Abstand zwischen dem unteren Ende des Filterkörpers und dem oberen Ende des Absorptionskörpers ist eine eindeutig festgelegte Wegstrecke gegeben, in der der Sedimentationsverlauf verfolgbar ist, wobei der Absorptionskörper ein eindeutiges Endsignal liefert, wenn die Sedimentationsgrenze die obere Begrenzung des Absorptionskörpers erreicht und durchläuft. Ab diesem Zeitpunkt findet dann in dem Messbereich keine Veränderung mehr statt. Der Abstand zwischen dem Absorptionskörper und dem Filtereinsatz kann bei der Herstellung der Pipette in relativ engen Toleranzen festgehalten bzw. eingestellt werden, so dass die Wegstrecke bekannt ist. Es ist aber auch möglich, diese Wegstrecke bei der maschinellen Auswertung noch einmal zu überprüfen oder überhaupt auszumessen, um den Bezug herzustellen. Der Abstand kann etwa 0,5 mm betragen. Der Absorptionskörper kann aussen oder im Rohr oder auch im Material des Rohres z. B. eingeschmolzen, vorgesehen sein. Seine Anbringungsart richtet sich nach den jeweils einfachsten Herstellungsverfahren.

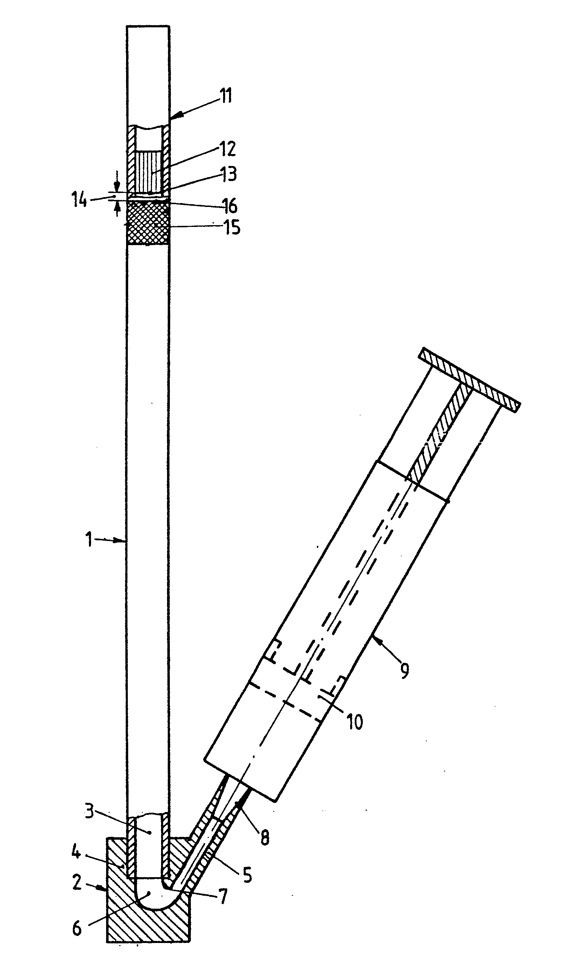

Ein Ausführungsbeispiel der Erfindung ist in der Zeichnung dargestellt, die einen Schnitt durch die Pipette zeigt.

Die Pipette weist ein Rohr 1 auf, dem ein Einfüllstutzen 2 zugeordnet sein kann. Beide Teile werden getrennt voneinander hergestellt und können entweder von Seiten des Herstellers miteinander verbunden, also ineinandergesteckt werden, oder aber auch getrennt in Verkehr kommen, so dass sie kurz vor der Benutzung ineinandergesteckt werden. Das Rohr 1 besteht beispielsweise aus Glas, Kunststoff o. dgl., ist also durchsichtig, um den Sedimentationsverlauf bestimmen bzw. beobachten zu können. Das Rohr 1 besitzt einen über seine Länge durchgehenden konstanten Innendurchmesser.

Der Einfüllstutzen 2 besitzt einen Rohraufnahmeabzweig 4 und einen Einfüllabzweig 5, die in dem Einfüllstutzen 2 über einen Kanal 6 miteinander in Verbindung stehen. Der Kanal 6 besitzt zumindest an seinem im Rohraufnahmeabzweig 4 gelegenen Teil einen Innendurchmesser, der dem Innendurchmesser 3 des Rohres 1 entspricht, so dass hier ein Querschnittsübergang ohne strömungsverengende Einbauten o. dgl. gewährleistet ist. Am Kanal 6 sind auch scharfe Kanten, Vorsprünge u. dgl. vermieden, insbesondere an der Übertrittsstelle 7 des Kanals 6 von dem Einfüllabzweig 5 in den Rohraufnahmeabzweig 4. Am freien Ende des Einfüllabzweiges 5 ist eine konische Ansatzfläche 8 für eine Spritze 9 ausgebildet, in der das Sedimentationsgut enthalten ist, welches mit Hilfe eines Kolbens 10 in der bekannten Weise aus der Spritze 9 herausdrückbar und in das Rohr einfüllbar ist. Zwischen dem Rohr 1 bzw. dem Rohraufnahmeabzweig 4 und dem Einfüllabzweig 5 kann ein spitzer Winkel vorgesehen sein. Die Achsen des Rohres 1 und des Einfüllabzweiges 5 bzw. der Spritze 9 können dabei insbesondere einen Winkel von 30° miteinander einschliessen.

Hierdurch ist gewährleistet, dass das Sedimentationsgut mit Hilfe der Spritze 9 blasenfrei in das Rohr 1 eingefüllt werden kann. In der Spritze 9 enthaltene Blasen sammeln sich beim Einfüllen der Spritze in abwärts geneigter Stellung am oberen Ende der Kammer der Spritze. Die durch das Ansetzen der Spritze 9 an der konischen Ansatzfläche 8 im Einfüllstutzen 2 eingeschlossene Luft wird durch das aus der Spritze ausgepresste Sedimentationsgut vor sich hergeschoben und steigt vor dem Sedimentationsgut in dem Rohr 1 auf. Durch die Vermeidung von Drosseln, Absperrventilen und anderen strömungsverengenden Einbauten im Einfüllstutzen 2 wird dieses Ausschieben der Luft ermöglicht. Beim Einfüllvorgang des Sedimentationsgutes ändert sich die Strömungsgeschwindigkeit beim gleichmässigen Drücken an der Spritze 9 nicht. Das Sedimentationsgut wird somit schonend und ohne wesentliche Verwirbelung aufgefüllt.

Um das Sedimentationsgut nicht nur blasenfrei, sondern auch meniskusfrei und bis zu einer jeweils definierten Höhe in das Rohr einzufüllen – sei es mit Hilfe der Spritze 9 und des Einfüllstutzens 2 oder sei es durch einen Saugvorgang –, ist im oberen Bereich 11 des Rohres 1 ein Filtereinsatz 12, beispielsweise ein Kunststoffilter, eingebracht und ortsfest angeordnet. Der Filtereinsatz 12 ist gas- und wasserdurchlässig, jedoch für das Sedimentationsgut nur bedingt durchlässig, so dass es auch ohne besondere Geschicklichkeit möglich ist, das Sedimentationsgut bis zu der unteren Begrenzung 13 des Filtereinsatzes 12, die eben ausgebildet ist, aufzufüllen, so dass der üblicherweise ohne einen solchen Filtereinsatz oder bei einem solchen teilweise undurchlässigen Filtereinsatz vorhandenen Meniskus, also die Durchwölbung der oberen Begrenzung der Säule des Sedimentationsgutes, verschwindet. Damit hat man eindeutige und definierte Ausgangsbedingungen für den Sedimentationsverlauf.

In Weiterbildung der Pipette, insbesondere zur Verwendung bei maschineller Auswertung des Sedimentationsverlaufs, kann unterhalb des Filtereinsatzes 12 und in einem Abstand 14 ein Absorptionskörper 15 ortsfest angeordnet sein. Der Absorptionskörper kann entweder in dem Rohr 1, auf der Aussenwandung des Rohres 1 oder auch in der Wandung des Rohres 1 vorgesehen sein. Er kann beispielsweise aus einem aussen aufgebrachten Auftrag aus einer Beschichtung oder jedenfalls einem für das Auswertesignal undurchlässigen Material bestehen. Der Absorptionskörper bildet mit seiner oberen Begrenzung 16 den Abstand 14 zu der Begrenzung 13 des Filtereinsatzes 12 aus. Die axiale Länge des Absorptionskörpers 15 ist nicht entscheidend. Sie sollte nur so gross sein, dass der Messbereich durch den Filtereinsatz 12 und den Absorptionskörper 15 begrenzt wird. Damit wird eindeutig der Abstand 14 als Wegstecke für den Sedimentationsverlauf vorgegeben und eingestellt. Die maschinelle Auswertung erleichtert sich hiermit erheblich. Der Messvorgang wird vereinfacht, insbesondere bei elektronischer Erfassung. Wenn nämlich die Sedimentationsgrenze den Abstand 14 durchlaufen hat, und in den Bereich des Absorptionskörpers 15 gelangt, wird in der Messstrecke, also im Abstand 14 nichts mehr verändert, so dass durch das Konstantbleiben des Messsignals das Verschwinden der Sedimentationsgrenze im Bereich des Absorptionskörpers 15 sehr genau feststellbar ist.

Der Abstand 14 kann etwa 0,5 mm oder auch mehr betragen. Es ist möglich, diesen Abstand 14 bei der Herstellung schon sehr genau einzuhalten oder aber auch geringere Genauigkeitsanforderungen zu stellen, wenn das Messgerät über eine Messeinrichtung verfügt, um diese Wegstrecke des Abstandes in jedem einzelnen Messfalle dann zunächst auszumessen und der Messung zugrunde zu legen.

**Patentansprüche**

1. Pipette zur Durchführung und Bestimmung von Sedimentationsverläufen, insbesondere der Blutsenkung, mit einem durchsichtigen, insbesondere ungraduierten Rohr aus Glas, Kunststoff o.dgl., an dessen einem Ende eine das aufzufüllende Sedimentationsgut enthaltende Spritze derart ansetzbar ist, dass ein blasenfreies Einfüllen gewährleistet ist, dadurch gekennzeichnet, dass im Rohr (1) ein Filtereinsatz (12) vorgesehen ist, der für Gas und für die Flüssigkeit des Sedimentationsguts durchlässig ausgebildet ist und im wesentlichen den gesamten freien Querschnitt des Rohres (1) ausfüllt.

2. Pipette nach Anspruch 1, dadurch gekennzeichnet, dass der Filtereinsatz bei Blut als Sedimentationsgut eine Porosität von 1–10 µ – insbesondere 5 µ – aufweist.

3. Pipette nach Anspruch 1 oder 2, dadurch gekennzeichnet, dass am unteren Ende des Rohres (1) ein Einfüllstutzen (2) vorgesehen ist, der in seinem Querschnitt keine querschnittsverengenden Einbauten aufweist.

4. Pipette nach Anspruch 3, dadurch gekennzeichnet, dass das Rohr (1) und ein am Einfüllstutzen (2) vorgesehener Rohraufnahmeabzweig (4) gleichen Innendurchmesser aufweisen und am Übergang von einem Einfüllabzweig (5) zu dem Rohraufnahmeabzweig (4) abgerundete Kanten vorgesehen sind.

5. Pipette nach Anspruch 1 und 3, dadurch gekennzeichnet, dass zwischen dem Filtereinsatz (12) im Rohr (1) und dem Einfüllstutzen (2) ein Absorptionskörper (15) im Abstand (14) von der unteren Kante (13) des Filtereinsatzes (12) vorgesehen ist.

6. Pipette nach Anspruch 5, dadurch gekennzeichnet, dass der Abstand (14) etwa 0,5 mm beträgt.

7. Pipette nach Anspruch 5, dadurch gekennzeichnet, dass der Absorptionskörper (15) aussen oder im Rohr (1) angeordnet ist.

**Claims**

1. Pipette for carrying out sedimentation tests with a view to determining sedimentation curves, in particular for blood sedimentation tests, this pipette possessing a transparent tube, especially one which is ungraduated, made of glass or plastic, or of some similar material, it being possible to attach a syringe to one end of the said tube, this syringe containing the product in which the sedimentation process in question occurs, and with which the said tube is to be filled to its top, attachment of the said syringe being effected in a manner such that bubble-free filling is guaranteed, characterized in that a filter insert (12) is provided in the tube (1), occupying essentially the whole of its open cross-section, this filter insert being designed to be permeable both to gas and to the liquid component of the product in which the sedimentation process in question occurs.

2. Pipette according to Claim 1, characterized in that, if blood is the product in which the sedimentation process in question occurs, the filter insert (12) exhibits a porosity of 1 to 10 µ – in particular 5 µ.

3. Pipette according to Claim 1 or 2, characterized in that a filling-connection piece (2) is provided at the lower end of the tube (1), this connection piece (2) being devoid of internally-installed devices within its cross-section, which would otherwise constrict it.

4. Pipette according to Claim 3, characterized in that the inside diameter of the tube (1) equals that of a tube-mounting branch (4) which is provided on the filling-connection piece (2), while rounded-off corners are provided at the transition between a filling branch (5) and the tube-mounting branch (4).

5. Pipette according to Claims 1 and 3, characterized in that an absorbing body (15) is provided between the filter insert (12), which is inside the tube (1), and the filling-connection piece (2), this absorbing body (15) being located at a distance (14) from the lower edge (13) of the filter insert (12).

6. Pipette according to Claim 5, characterized in that the distance (14) amounts to approximately 0.5 mm.

7. Pipette according to Claim 5, characterized in that the absorbing body (15) is mounted either externally or inside the tube (1).

**Revendications**

1. Pipette pour l'exécution de la sédimentation et la mesure de sa vitesse, en particulier de la sédimentation sanguine, avec un tube transparent, en particulier un tube de verre, matière plastique ou similaire, non gradué, à une extrémité duquel on peut placer une seringue contenant le produit dont on veut mesurer la vitesse de sédimentation à faire passer dans le tube, caractérisée par le fait que le tube (1) contient un élément filtrant (12) qui est perméable aux gaz et au liquide du produit dont on mesure la vitesse de sédimentation et qui occupe essentiellement la totalité de la section du tube (1).

2. Pipette selon la revendication 1, caractérisée par le fait que l'élément filtrant a une porosité de 1 à 1o µ – en particulier 5 µ – lorsque le produit dont on mesure la vitesse de sédimentation est du sang.

3. Pipette selon la revendication 1 ou 2, caractérisée par le fait qu'à l'extrémité inférieure du tube (1) se trouve un embout de remplissage (2) qui en contient aucun élément susceptible de réduire la section.

4. Pipette selon la revendication 3, caractérisée par le fait que le tube (1) et la branche de réception (4) du tube de l'embout de remplissage (2), ont le même diamètre intérieur et que des angles arrondis sont prévus dans le passage entre le logement de réception (4) du tube et le conduit de remplissage (5).

5. Pipette selon les revendications 1 et 3, caractérisée par le fait que, entre le filtre (12) du tube (1) et l'embout de remplissage (2) est prévue une matière absorbant la lumière (15) à une certaine distance (14) du bord inférieur de l'élément filtrant (12).

6. Pipette selon la revendication 5, caractérisée par le fait que la distance (14) est d'environ 0,5 mm.

7. Pipette selon la revendication 5, caractérisée par le fait que la matière absorbant (15) est située à l'extérieur du tube (1), ou à l'intérieur.